Europäisches Patentamt

European Patent Office

Office européen des brevets

(19)

(11) Numéro de publication: **0 197 992**
**B1**

(12) **FASCICULE DE BREVET EUROPEEN**

(45) Date de publication du fascicule du brevet:
**21.02.90**

(51) Int. Cl.⁵: **G 02 F 1/133,** G 06 F 11/20

(21) Numéro de dépôt: **85904986.8**

(22) Date de dépôt: **11.10.85**

(86) Numéro de dépôt international:
**PCT/FR 85/00289**

(87) Numéro de publication internationale:
**WO 86/02464 (24.04.86** Gazette 86/9)

(54) **ECRAN D'AFFICHAGE A MATRICE ACTIVE A DOUBLE TRANSISTOR D'ADRESSAGE.**

(30) Priorité: **17.10.84 FR 8415899**

(43) Date de publication de la demande:
**22.10.86 Bulletin 86/43**

(45) Mention de la délivrance du brevet:
**21.02.90 Bulletin 90/8**

(84) Etats contractants désignés:
**BE DE GB IT NL SE**

(56) Documents cités:
**EP-A- 0 031 143**
**EP-A- 0 086 349**
**GB-A- 2 115 199**

**Patents Abstracts of Japan, volume 8, no. 18 (P-250)
(1455), 26 janvier 1984 & JP, A, 58178321**

(73) Titulaire: **Richard, Joseph, 33 Lotissement Keranroux
Ploubezre, F-22300 Lannion (FR)**
Titulaire: **VINOUZE, Bruno, Chemin de la Chapelle Port
Blanc, F-22700 Penvenan (FR)**
Titulaire: **Bonnel, Madeleine, 38 Résidence du Roux,
F-22300 Lannion (FR)**

(72) Inventeur: **Richard, Joseph, 33 Lotissement Keranroux
Ploubezre, F-22300 Lannion (FR)**
Inventeur: **VINOUZE, Bruno, Chemin de la Chapelle Port
Blanc, F-22700 Penvenan (FR)**
Inventeur: **Bonnel, Madeleine, 38 Résidence du Roux,
F-22300 Lannion (FR)**

(74) Mandataire: **Mongrédien, André et al, c/o
BREVATOME 25, rue de Ponthieu, F-75008 Paris (FR)**

## Description

La présente invention a pour objet un écran d'affichage à matrice active à double transistor d'adressage.

Un écran d'affichage à matrice active est un dispositif formé d'une mosaïque de points mémoire, répartis sur toute la surface d'un support. Ces points mémoire stockent le signal vidéo pendant toute la durée d'affichage d'une image. Un transducteur électronique (par exemple un cristal liquide) est en contact avec chaque point mémoire. Ce transducteur est excité pendant toute la durée d'une image, alors que, dans les systèmes dépourvus de mémoire électronique, le transducteur n'est sollicité que pendant la durée de l'excitation du point. L'effet optique et le taux de multiplexage sont donc améliorés.

Le transistor à couches minces (en abrégé TCM) se prête bien à la réalisation d'un tel dispositif. Chaque point mémoire est alors situé au croisement d'une ligne et d'une colonne d'adressage et il est constitué d'un TCM d'adressage et d'un condensateur. Dans le cas où le transducteur est un cristal liquide, les armatures du condensateur sont constituées par les électrodes de la cellule à cristal liquide elles-mêmes. Le point mémoire se ramène donc à un TCM et à un condensateur dont l'une des armatures est constituée par l'électrode disposée sur l'une des parois de la cellule qui contient le cristal liquide, l'autre armature étant constituée par la contre-électrode disposée sur l'autre paroi de la cellule.

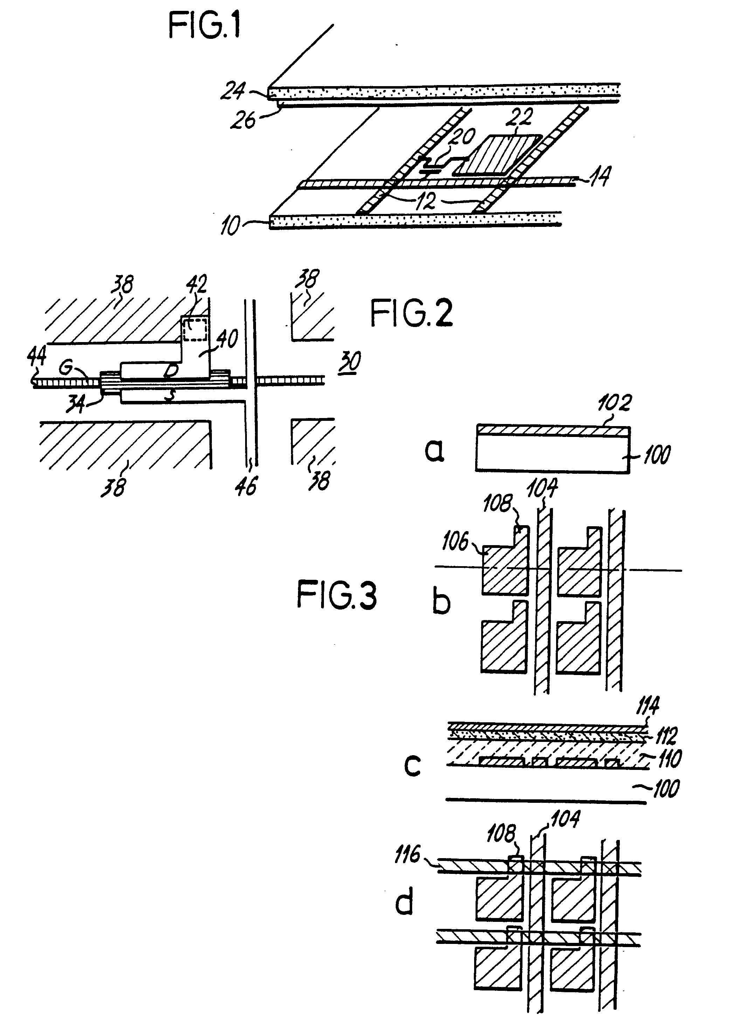

Une telle structure est représentée sur la figure 1. On y voit, d'une part, une paroi inférieure 10 portant des colonnes conductrices 12 et des lignes conductrices 14, un TCM 20 et une électrode transparente 22, et d'autre part, une paroi supérieure 24 recouverte d'une contre-électrode 26 également transparente.

L'adressage d'un tel dispositif s'effectue de la manière suivante. Les lignes sont portées séquentiellement à un potentiel qui correspond à la tension de grille apte à rendre le TCM conducteur. Pendant toute la durée d'application de ce potentiel sur une ligne, les signaux vidéo sont appliqués successivement aux diverses colonnes, ce qui a pour effet d'exciter tous les points d'affichage (ou «pixels») de la ligne. La commande d'une ligne étant achevée, on passe à la ligne suivante, etc...

L'image est ainsi affichée point par point, chaque point gardant la mémoire de l'excitation reçue, du fait de la structure en capacité de chaque pixel. La seule perte de charge résulte du courant de fuite qui s'écoule à travers le transistor d'adressage lorsque celui-ci est dans l'état bloqué. Mais la résistance équivalente présentée par ce transistor est généralement très élevée ($10^{13}$ ohms), de sorte que cet effet est pratiquement sans conséquence.

On connaît déjà bon nombre de procédés de fabrication de matrices actives utilisant des TCM et des condensateurs. La figure 2 illustre par exemple une technique décrite par A.J. SNELL et al. dans un article intitulé «Application of Amorphous Silicon Field Effect Transistors in Adressable Liquid Crystal Display Panels» publié dans «Applied Physics», 24, 357 - 362 (1981). Le TCM est formé d'une grille G en chrome déposée sur un substrat isolant 30, d'une couche de silicium amorphe 34 (aSi), d'un drain D et d'une source S en aluminium. L'armature inférieure du condensateur est formée d'une couche 38 d'oxyde d'étain et d'indium. La connexion entre le TCM et l'armature se fait par le drain D prolongé par une patte 40 qui emprunte un trou de contact 42. L'ensemble du circuit est constitué d'une pluralité de telles structures rangées sous forme matricielle. Les grilles G sont constituées par des lignes de connexion 44 et les sources par des colonnes 46.

On connaît une autre technique de fabrication dans laquelle, à la différence de la précédente, le TCM présente ses contacts de source et de drain à la partie inférieure et sa grille à la partie supérieure. Cette technique est décrite par M. MATSUMURA et al. dans l'article intitulé «Amorphous-Silicon Integrated Circuit», publié dans «Proceedings of the IEEE», vol. 68, n° 10, octobre 1980, pages 1349 - 1350.

On connaît encore un autre procédé de fabrication, plus efficace que les précédents en ce sens qu'il ne nécessite que deux niveaux de masquage au lieu de 5 ou 6, comme c'est le cas dans les deux procédés mentionnés plus haut. Cette technique est décrite dans la publication de brevet français FR-A-2 533 072 et intitulée «Procédé de fabrication de circuits électroniques à base de transistors en couches minces et de condensateurs».

Les différentes opérations effectuées selon ce procédé sont illustrées sur la figure 3 qui montre différents états intermédiaires de l'écran obtenu. Ces opérations sont les suivantes:

— préparation d'un substrat de verre 100, par exemple de la marque Corning 7059, par nettoyage physico-chimique;

— dépôt d'une couche 102 de matériau conducteur transparent, par exemple en oxyde d'étain et d'indium (a);

— première photogravure, pour donner à la couche 102 la forme de colonnes 104 et de pavés 106 munis d'un appendice rectangulaire 108 (b);

— dépôts d'une couche de silicium amorphe hydrogéné 110, d'une couche de silice 112 et d'une couche d'aluminium 114, chaque dépôt à environ 250°C (ou plus si on utilise la technique de CVD-plasma) (c);

— seconde photogravure, pour définir des lignes 116 chevauchant les appendices 108 et définissant les TCM (d);

— passivation générale par dépôt d'une couche de $SiO_2$.

Avec une telle technique, les TCM se trouvent localisés dans les zones de chevauchement des lignes 116 et des colonnes 104. La source et le drain sont respectivement constitués par l'appendice 108 et la partie de la colonne 104 située sous la ligne 116; la grille de commande est constituée par la partie de la ligne 116 qui est située entre l'appendice 108 et la colonne 104.

Il faut retenir de tous ces procédés de fabrication de matrices actives que pour chaque point d'affichage, il existe un transistor d'adressage et un seul, celui-ci assurant la connexion entre une colonne d'adressage et l'électrode définissant le pixel.

Si de tels dispositifs conviennent bien à certains égards, ils présentent cependant un inconvénient qui est lié au fait que certaines colonnes peuvent être coupées par des microrayures. Il en résulte alors que tout ou partie d'une colonne de pixels ne pourra pas être adressée. Cet effet se manifeste par l'apparition d'un segment noir sur fond blanc, ou blanc sur fond noir selon le type d'afficheur, ce qui est particulièrement désagréable à l'oeil.

La présente invention a justement pour but de remédier à cet inconvénient. A cette fin, l'invention préconise d'utiliser non plus un mais deux transistors d'adressage par pixel, ces deux transistors étant reliés à des lignes et colonnes adjacentes.

Il faut observer que l'on connait déjà des écrans d'affichage à deux transistors par pixel. Par exemple, le document GB-A-2 115 199 décrit un écran d'affichage à matrice active comprenant une matrice de points d'affichage et, entre ces points, des lignes d'adressage et des colonnes d'adressage, chaque point étant relié par un transistor MOS à une ligne et à une colonne. Dans cet écran connu, chaque point est, en outre, relié par un second transistor à la ligne suivante, mais toujours à la même colonne.

Une telle disposition permet d'introduire une certaine redondance et évite les effets optiques fâcheux liés à des coupures de ligne.

L'invention propose un perfectionnement à cette technique connue en doublant la redondance: elle affecte non seulement les lignes mais aussi les colonnes. Pour éviter des problèmes de croisements de connexions, qui conduiraient à compliquer le procédé de réalisation de l'écran, l'invention prévoit une disposition et une forme particulières du pavé conducteur constituant le pixel.

De façon précise, l'invention a pour objet un écran d'affichage à matrice active comprenant une matrice de points d'affichage et, entre ces points, des lignes d'adressage (Ln) et des colonnes d'adressage (Cn), chaque point (Pn, p) étant relié par un transistor à couches minces (Tn, p) à une ligne (Ln) et à une colonne (Cn), chaque point d'affichage (Pn, p) étant constitué d'un pavé rectangulaire, en matériau conducteur, relié à un appendice lequel est engagé sous la ligne d'adressage correspondant à ce point, et s'étendant à proximité de la colonne d'adressage correspondant à ce point, le transistor d'adressage (Tn, p) de chaque point étant situé dans la zone de recouvrement de la ligne d'adressage correspondante (Ln) avec, respectivement, cet appendice et la colonne correspondante, cet écran étant caractérisé par le fait que le pavé rectangulaire est relié à un second appendice diagonalement opposé au premier, engagé sous la ligne d'adressage suivante et s'étendant à proximité de la colonne d'adressage suivante, un second transistor (T$\overset{*}{n}$ + 1, p + 1) étant ainsi constitué pour le même point d'affichage, dans la zone de recouvrement de la ligne suivante (Ln + 1) avec respectivement le second appendice et la colonne suivante (Cn + 1).

L'intérêt de cette disposition est que, si l'une des colonnes d'adressage est coupée, le pixel peut quand même être excité par l'autre colonne. Pour qu'un pixel soit inaccessible, il faudrait donc que les deux colonnes qui l'encadrent soient simultanément coupées, ce qui, statistiquement, est peu probable.

Cette disposition ne complique en rien le procédé de fabrication de l'écran d'affichage. Il suffit de prévoir, dans l'une quelconque des procédés connus, dont certains ont été évoqués plus haut, l'emplacement d'un deuxième TCM pour chaque condensateur.

Naturellement, la présence du deuxième TCM modifie légèrement le processus d'adressage de chaque pixel en ce sens que le point excité Pn, p, au lieu de mémoriser l'excitation correspondant à la ligne Ln et à la colonne Cp comme dans l'art antérieur, mémorisera la dernière excitation reçue, en l'occurrence la deuxième (s'il n'y a pas de coupure) qui correspond à la ligne Ln + 1 et à la colonne Cp + 1. Mais cette modification est, dans la plupart des cas, sans importance puisqu'elle revient simplement à décaler l'image affichée d'un intervalle ligne et d'un intervalle colonne.

Les caractéristiques de l'invention apparaîtront mieux après la description qui suit, d'exemples de réalisation donnés à titre explicatif et nullement limitatif. Cette description se réfère à des dessins annexés sur lesquels:

la figure 1, déjà décrite, représente schématiquement un point d'affichage d'une matrice active,

la figure 2, déjà décrite, illustre un procédé connu de réalisation d'une matrice active,

la figure 3, déjà décrite, illustre un autre procédé connu de réalisation d'une matrice active,

la figure 4 représente schématiquement le principe d'un écran d'affichage selon l'invention,

la figure 5 montre un exemple de réalisation d'un tel écran.

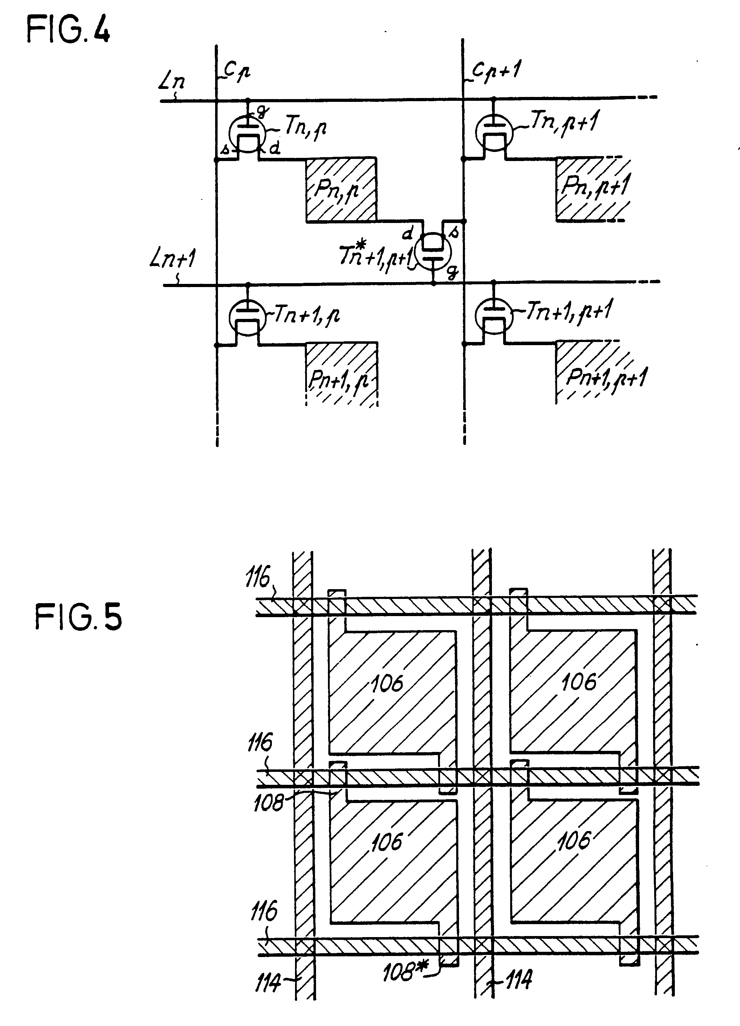

La figure 4 montre, de façon schématique, le principe de l'écran d'affichage à matrice active selon l'invention. Sur cette figure, seulement deux lignes d'adressage sont représentées, de rang n et n + 1 et seulement deux colonnes de rang p et p + 1. Ces lignes et colonnes sont notées Ln, Ln + 1 et Cp, Cp + 1. Un point d'affichage est repéré par un double indice, le premier relatif à la ligne qui le surmonte et le second à la colonne qui le précède. Aussi, le point d'affichage, ou pixel, noté Pn, p est le point situé sous la ligne Ln et à droite de la colonne Cp.

Cette même convention est reprise pour le transistor d'adressage Tn, p qui relie le point d'affichage à la ligne Ln et à la colonne Cp.

Selon l'invention, chaque point d'affichage Pn, p est relié à deux transistors d'adressage: un premier transistor Tn, p qui le relie à Ln et Cp et un second transistor T$\overset{*}{n}$ + 1, p + 1 qui le relie à Ln + 1 et à Cp + 1.

L'adressage s'effectue de la manière suivante. Lorsque la ligne Ln est active, Pn, p est excité à travers Tn, p lorsque la colonne Cp reçoit le signal vidéo approprié. Mais Pn, p est excité une seconde fois lorsque la ligne Ln + 1 est active et lorsque la colonne Cp + 1 reçoit le signal vidéo. C'est donc la seconde excitation qui est finalement mémorisée. Il y a donc, en définitive, translation de l'image d'un vecteur égal à la diagonale du carré délimité par deux lignes adjacentes et deux colonnes adjacentes, puisque l'information affichée en Pn, p est en fait l'information qui, dans l'art antérieur, est affichée en Pn + 1, p + 1.

Si l'une des deux colonnes Cp ou Cp + 1 est coupée, le point Pn, p sera tout de même excité par celle des deux colonnes qui est entière.

Dans certains cas, les colonnes de l'écran peuvent être interdigitées, c'est-à-dire reliées une sur deux au circuit d'adressage par des connexions situées soit en haut, soit en bas de l'écran. Deux colonnes qui sont adjacentes dans l'un des demi-systèmes d'adressage, sont en fait non adjacentes dans le système global. Il s'agit par exemple des colonnes Cn + 1, Cn + 3 ou Cn et Cn + 2. Dans ce cas, les effets des coupures de deux colonnes adjacentes sont supprimés.

Pour fabriquer l'écran d'affichage de l'invention, n'importe lequel des procédés décrits plus haut peut être utilisé, avec cette adaptation consistant à prévoir deux transistors par pixel au lieu d'un. Selon une variante avantageuse, on préfère utiliser le dernier procédé mentionné, qui ne requiert que deux niveaux de masquage. Dans ce cas, la matrice se présente comme illustré sur la figure 5. Les références numériques utilisées reprennent celles de la publication FR-A-2 533 072 déjà citée. Chaque point d'affichage comprend un pavé rectangulaire (ou carré) 106 avec deux appendices 108 et 108* qui s'étendent le long de deux colonnes adjacentes 114 et qui s'engagent sous deux lignes adjacentes 116. Le premier transistor d'adressage se trouve dans la zone de chevauchement d'une ligne 116 avec respectivement une colonne 114 et le premier appendice 108. Le second transistor se trouve dans la zone de chevauchement de la ligne suivante avec respectivement le second appendice 108* et la colonne suivante.

## Revendication

1. Écran d'affichage à matrice active comprenant une matrice de points d'affichage et, entre ces points, des lignes d'adressage (Ln) et des colonnes d'adressage (Cn), chaque point (Pn, p) étant relié par un transistor à couches minces (Tn, p) à une ligne (Ln) et à une colonne (Cn), chaque point d'affichage (Pn, p) étant constitué d'un pavé rectangulaire, en matériau conducteur, relié à un appendice (108) lequel est engagé sous la ligne d'adressage (116) correspondant à ce point, et s'étendant à proximité de la colonne d'adressage (114) correspondant à ce point, le transistor d'adressage (Tn, p) de chaque point étant situé dans la zone de recouvrement de la ligne d'adressage correspondante (Ln) avec, respectivement, cet appendice (108) et la colonne (114) correspondante, cet écran étant caractérisé par le fait que le pavé rectangulaire est relié à un second appendice (108*) diagonalement opposé au premier, engagé sous la ligne d'adressage suivante et s'étendant à proximité de la colonne d'adressage suivante, un second transistor (Tñ + 1, p + 1) étant ainsi constitué pour le même point d'affichage, dans la zone de recouvrement de la ligne suivante (Ln + 1) avec respectivement le second appendice (108*) et la colonne suivante (Cn + 1).

## Patentanspruch

1. Anzeigevorrichtung mit aktiver Matrix, enthaltend eine Matrix aus Anzeigepunkten und zwischen diesen Punkten Adressierzeilen (Ln) und Adressierspalten (Cn), wobei jeder Punkt (Pn, p) durch einen Dünnschichttransistor (Tn, p) mit einer Zeile (Ln) und einer Spalte (Cn) verbunden ist, jeder Anzeigepunkt (Pn, p) von einem rechteckigen Fleck aus Leitermaterial gebildet ist, der mit einem Ansatz (108) verbunden ist, der unter der Adressierzeile (116), die diesem Punkt entspricht, liegt und sich in die Nähe der Adressierspalte, die diesem Punkt entspricht, erstreckt, wobei der Adressiertransistor (Tn, p) eines jeden Punktes in einer Überdeckungszone der entsprechenden Adressierzeile (Ln) mit jeweils diesem Ansatz (108) und der entsprechenden Spalte (114) liegt, wobei dieser Schirm durch die Tatsache gekennzeichnet ist, daß der rechteckige Fleck mit einem zweiten Ansatz (108*) verbunden ist, der dem ersten diagonal gegenüberliegt, unter der nachfolgenden Adressierleitung liegend, und sich in die Nähe der nachfolgenden Adressierspalte erstreckt, wodurch ein zweiter Transistor (Tñ + 1, p + 1) für denselben Anzeigepunkt in der Überdeckungszone der folgenden Zeile (Ln + 1) mit jeweils dem zweiten Ansatz (108*) und der folgenden Spalte (Cn + 1) gebildet wird.

## Claim

1. Active array display screen having an array of display points and, between said points, addressing lines (Ln) and addressing columns (Cn), each point (Pn, p) being connected by a thin film transistor (Tn, p) to a line (Ln) and to a column (Cn), each display point (Pn, p) being constituted by a conductive material, rectangular pad, connected to an appendix (108), which is engaged beneath the corresponding addressing line (116) at this point and extending in the vicinity of the addressing column corresponding to said point, the addressing transistor (Tn, p) of each point being located in the overlap zone of the corresponding addressing line (Ln) with respectively said appendix (108) and the corresponding column (114), said screen being characterized in that the rectangular pad is connected to a second appendix (108') diagonally opposite to the first, engaged beneath the following addressing line and extending in the vicinity of the following addressing column, a second transistor (Tñ + 1, p + 1) thus being constituted for the same display point, in the overlap zone of the following line (Ln + 1) with respectively the second appendix (108') and the following column (Cn + 1).

FIG.1

FIG.2

FIG.3

# FIG.4

# FIG.5